(19)

Europäisches
Patentamt
European
Patent Office
Office européen
des brevets

(11) **EP 3 958 167 B1**

(12) **EUROPEAN PATENT SPECIFICATION**

(45) Date of publication and mention
of the grant of the patent:
**20.03.2024  Bulletin 2024/12**

(21) Application number: **20192258.0**

(22) Date of filing: **21.08.2020**

(51) International Patent Classification (IPC):
*G06V 10/774* *(2022.01)*     *G06V 20/56* *(2022.01)*

(52) Cooperative Patent Classification (CPC):
**G06V 10/7753; G06V 20/56**

(54) **A METHOD FOR TRAINING A NEURAL NETWORK TO DELIVER THE VIEWPOINTS OF OBJECTS USING UNLABELED PAIRS OF IMAGES, AND THE CORRESPONDING SYSTEM**

VERFAHREN ZUM TRAINIEREN EINES NEURONALEN NETZES ZUR BEREITSTELLUNG DER ANSICHTSPUNKTE VON OBJEKTEN UNTER VERWENDUNG UNMARKIERTER BILDERPAARE UND ZUGEHÖRIGES SYSTEM

PROCÉDÉ DE FORMATION D'UN RÉSEAU NEURONAL POUR FOURNIR LES POINTS DE VUE D'OBJETS À L'AIDE DE PAIRES D'IMAGES SANS ÉTIQUETTE ET SYSTÈME CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.02.2022  Bulletin 2022/08**

(73) Proprietors:
• **Toyota Jidosha Kabushiki Kaisha**
  **Toyota-shi, Aichi-ken 471-8571 (JP)**
• **The University Court Of**
  **The University of Edinburgh**
  **South Bridge**
  **Edinburgh**
  **EH8 9YL (GB)**

(72) Inventors:
• **MEIER, Sven**
  **1140 Brussels (BE)**
• **MARIOTTI, Octave**
  **Edinburgh, Scotland EH8 9YL (GB)**
• **BILEN, Hakan**
  **Edinburgh, Scotland, EH8 9YL (GB)**

(74) Representative: **Cabinet Beau de Loménie**
  **158, rue de l'Université**
  **75340 Paris Cedex 07 (FR)**

(56) References cited:
• **RHODIN HELGE ET AL: "Unsupervised Geometry-Aware Representation for 3D Human Pose Estimation", 6 October 2018 (2018-10-06), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047488373, ISBN: 978-3-642-17318-9 [retrieved on 2018-10-06] * the whole document ***
• **L Perez Rey ET AL: "SEMI-SUPERVISED POSE ESTIMATION WITH GEOMETRIC LATENT REPRESENTATIONS", , 25 September 2019 (2019-09-25), XP055766472, https://openreview.net/forum?id=S1et8gBKwH Retrieved from the Internet: URL:https://openreview.net/pdf?id=S1et8gBK wH [retrieved on 2021-01-19]**
• **WORRALL DANIEL E ET AL: "Interpretable Transformations with Encoder-Decoder Networks", 2017 IEEE INTERNATIONAL CONFERENCE ON COMPUTER VISION (ICCV), IEEE, 22 October 2017 (2017-10-22), pages 5737-5746, XP033283454, DOI: 10.1109/ICCV.2017.611 [retrieved on 2017-12-22]**

EP 3 958 167 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the disclosure

The present disclosure is related to the field of data processing using neural networks, for example image processing using neural networks. More precisely, the present disclosure relates to neural networks able to detect viewpoints of objects visible on images.

Description of the Related Art

It has been proposed to detect three-dimensional objects on images acquired by cameras by using neural networks implemented on computer systems. Typically, it is desirable to also obtain information relative to the 6D pose of the objects visible on an image. "6D pose" is an expression well known to the person skilled in the art which designates the combination of the three-dimensional position and of the three-dimensional orientation of an object. Obtaining the 6D pose is particularly useful in the field of robotics wherein objects are detected and manipulated. It is also useful to determine the orientation of an object in a driving scene to as to allow autonomous or partially autonomous driving.

The viewpoint of an object visible on an image is one such information relative to the 6D pose which is desirable. The viewpoint can be defined as the azimuth, the elevation, and the in-plane rotation of an object relative to the camera used to acquire the image. Neural networks have also been used to determine automatically the viewpoint of an object visible on an image.

In order to obtain a neural network which performs the task of determining automatically the viewpoint of an object visible on an image, a training phase of the neural network has to be performed. This training phase is usually performed using a labelled set of training images. By labelled, what is meant is that the viewpoint of an object of interest is provided for each image of the set of training images; the provided viewpoint is called the ground truth. Training then consists in inputting the images from the training set to the neural network, comparing the output of the neural network with the corresponding ground truth, and adapting the parameters of the neural network on the basis of this comparison (for example using the well-known stochastic gradient method).

As is well known in the art, a large number of labelled training images is necessary to obtain a good training of a neural network. Large-scaled labeled datasets have been an important driving force in the advancement of the state-of-the-art in computer vision tasks. However, annotating data is expensive (i.e. time-consuming), and is not scalable to a growing body of complex visual concepts. In fact, obtaining ground truths/labels typically involves using specialized hardware, controlled environments and an operator manually aligning 3D CAS models with real-world objects.

While it is known from the prior art to use labelled datasets to train a neural network to detect viewpoints of objects, how to use unlabeled data remains unclear. It is however desirable to use unlabeled data as it is inexpensive and easier to obtain.

It has been proposed (for example in document "Multi-view object class detection with a 3d geometric model", Liebelt, J., Schmid, C., 2010 IEEE Computer Society Conference on Computer Vision and PatternRecognition. pp. 1688-1695. IEEE (2010)) to render 3D CAD images of objects under different viewpoints to train neural networks (the ground truth is therefore known for the rendering). While it is possible to generate a large amount of labeled synthetic data with rendering and simulator tools and learn viewpoint estimators on them, discrepancies between the synthetic and real world images make their transfer challenging. Thus, it has been proposed in document "Render for cnn: Viewpoint estimation in images using cnns trained with rendered 3d model views" (Su, H., Qi, C.R., Li, Y., Guibas, L.J., Proceedings of theIEEE International Conference on Computer Vision. pp. 2686-2694 (2015)) to overlay rendered images from large 3D model collections on top of real images and such methods result in realistic training images and improves the detection of viewpoints when these images are used during training. This solution however requires the existence of a large collection of 3D models and of background scenes, which is also a difficulty.

It has also been proposed in multiple documents to use unlabeled images in processes called self-supervised or unsupervised. In these processes, information is leveraged from unlabeled images to improve the training of the neural network to detect viewpoints or poses.

Document "Unsupervised geometry-aware representation for 3d human pose estimation" (Rhodin, H., Salzmann, M., Fua, P., Proceedings of the European Conference on Computer Vision (ECCV). pp. 750-767 (2018)) discloses an unsupervised method in which an auto-encoder is used to learn to translate an image from a first viewpoint to an image with another viewpoint in a multi-camera setup. This solution is not satisfactory as it requires the knowledge of the rotation between each camera pair. In the document "Semi-supervised pose estimation with geometric latent representations" (L. Perez Rey, Jarnikov; D; And Holenderski; M, submitted to the ICLR 2019 conference), Conditional Variational Autoencoders (CVAEs) with circular latent representations to estimate the corresponding 2D rotations of an object.

There is a need for more efficient methods to obtain neural networks which can automatically determine the viewpoint of an object visible on an image.

Summary of the disclosure

The present disclosure overcomes one or more deficiencies of the prior art by proposing a method for training a neural network to deliver the viewpoint of a given object visible on an image when this image is inputted to this neural network, the method comprising:

> providing an encoder neural network configured to receive an image as input and to deliver an encoded image,
> providing a decoder neural network configured to receive an encoded image having the same dimensions as an encoded image delivered by the encoder neural network, and configured to output a decoded image (i.e. an image),
> providing a first set of training images with, for each image, the viewpoint (i.e. the ground truth) of an object belonging to a given category which is visible on the image,
> providing a second set of training image pairs, wherein each pair of the second set of training image pairs comprises:
>
> - a first image on which an object belonging to the given category (a category of objects, for example cars, pedestrians, etc.) is visible;
> - a second image on which the object of the first image is visible with a viewpoint which differs from the viewpoint in the first image,
>
> and wherein training the neural network comprises adapting the parameters of the neural network, the parameters of the encoder neural network, and the parameters of the decoder neural network by minimizing the distances between:
>
> - for each training image of the first set of training images, the output of the neural network when the training image is inputted to the neural network, with the viewpoint of this training image,
> - for each pair of the second set of training image pairs, the second image of each pair of the second set of training image pairs with the output of the decoder neural network when:
>
>> ◦ the first image of this pair is inputted to the encoder neural network to obtain an encoded image,
>> ◦ the second image of this pair is inputted to the neural network to obtain a viewpoint,
>> ◦ the encoded image is rotated by a rotation corresponding to this viewpoint to obtain a rotated encoded image,
>> ◦ the rotated encoded image is inputted into the decoder neural network to obtain the output of the decoder neural network.

This method may be implemented on a computing system, for example to perform the training automatically.

In the present description, viewpoint means viewpoint with respect to the camera used to acquire the image on which the object is visible.

Training the neural network can be performed iteratively, for example after each calculation of a distance or after a given number of calculations of distances, the stochastic gradient descent may be used or any other suitable training algorithm or variant of the stochastic gradient descent. The stochastic gradient descent can be used to adapt the parameters of the neural network, the encoder neural network, and the decoder neural network in a manner known in itself. These parameters are, for example the weights of these neural networks. Minimizing the distances comprises calculating a loss to be minimized, and, for example, back-propagating this loss through the decoder neural network, the neural network, and the encoder neural network.

It should be noted that the person skilled in the art will know how to select the structures of the neural network, of the encoder neural network, and of the decoder neural network. For example, the neural network has to be able to receive images having a given resolution as input with a depth of 3 (if it receives RGB images), and it also has to output at least three numbers for representing the viewpoint (azimuth, elevation, in-plane rotation), and this corresponds to given numbers of neurons for the first layer and for the final layer of this neural network.

Also for example, the encoder neural network has to be able to receive images having a given resolution as input with a depth of 3 (if it receives RGB images). It also has to be able to output an encoded image which can be rotated, and this corresponds to given numbers of neurons for the first layer of the encoder neural network and the final layer of the encoder neural network. The dimensions of this encoded image can be found in a calibration step. Consequently, the first layer of the decoder neural network has the same number of neurons as the last layer of the encoder neural network, as it is able to receive encoded images, and the final layer of the decoder neural network has the same number of neurons as the first layer of the encoder neural network, as it is able to output images.

It should be noted that the encoder neural network and the decoder neural network form an auto-encoder, using an expression well known to the person skilled in the art.

The person skilled in the art will also know how to determine the distance between two images, for example the distance between the output of the decoder neural network and the second image, or the distance between the output of the neural network and the corresponding viewpoint in the first set.

In the above method, it is not necessary to know the rotation between two images of a pair of images, the rotation to be applied is only obtained from the viewpoint of the second image. In fact, it has been observed by the inventors that the encoder neural network may produce encoded images that are associated with a generic/canonical viewpoint, applying the rotation obtained from the second image is sufficient to obtain a rotated encoded image which will lead to a decoded image which is close to the second image, also in terms of viewpoint. This behavior is a result of the training.

Also, the above method may be able to determine automatically the viewpoints of objects from the given category, or objects from a plurality of categories. Preferably, the images used in the above method only show one object of this plurality of category per image.

According to a particular embodiment, the viewpoint of an object visible on an image comprises 3 values defining a (3D) vector expressed in a referential centered with respect to the object and oriented towards the image acquisition apparatus used to acquire the image.

This referential may be aligned according to the category of object. For example, for a car, the referential can be centered around the center of the car, and a first axis may go from the front to the back of the car, a second from a side to another side, and the third is vertical and perpendicular to the other two. Different categories may have different referentials.

Also, this vector corresponds to the three elements which define a viewpoint (i.e. the azimuth, the elevation, and the in-plane rotation.

From these three values, it is possible to deduce in a simple manner a rotation matrix which can then be applied to the encoded image.

Alternative representations of the viewpoint may also be used, for example such as quaternions.

According to a particular embodiment, the encoded image is a vector having a resolution which is lower than the resolution of the image.

Obtaining a vector as output of the encoder neural network can be done by having a fully connected layer as the last layer of the encoder neural network.

For example, the resolution of the vector is its depth, and the resolution of the image is its width multiplied by its height multiplied by 3 (RGB image). It has been observed that a lower resolution for the vector provides a better encoding of global information from the images.

According to a particular embodiment, the resolution of the encoded image is a multiple of three.

For example, the depth of the vector can be expressed as 3 times k, with k being an integer.

This particular embodiment facilitates the multiplication of the encoded image by a rotation matrix obtained from the viewpoint outputted by the neural network.

According to a particular embodiment, training the neural network is performed using the following loss function:

$$L = \min_{\theta_v, \theta_e, \theta_d} \frac{\sum_{(I,v) \in T} \|f_v(I; \theta_v) - v\|^2}{+\lambda \sum_{(I,I') \in T} \left\|f_d\big(R(f_v(I'; \theta_v)) \times f_{e(I; \theta_e)}\big); \theta_d\big) - I'\right\|^2}$$

wherein:

$L$ is the loss,
$T$ is the first set of training images,
$U$ is the second set of pairs of training images,
$I$ is a first image of a pair of training images of the second set of training images or an image of the first training set,
$I'$ is a second image of a pair of training images,
$f_v$, $f_e$, and $f_d$ are respectively the neural network, the encoder neural network, and the decoder neural network,
$\theta_v$, $\theta_e$, and $\theta_d$ are respectively the parameters of $f_v$, $f_e$, and $f_d$,
$v$ is the viewpoint of image $I$,
$R(x)$ is a function which determines a rotation associated with viewpoint $x$, and

$\lambda$ is a hyperparameter of the training.

It should be noted that if *T* comprises pairs of images of a same objects under different viewpoints, images from T may also be used in the second sum to perform the training.

Also, this training may be performed by processing batch of images from *T* and *U* chosen randomly. For each batch of images, the two sums are calculated before performing a method such as the stochastic gradient method on the basis of the above formula.

By way of example, each batch comprises 64 individual images.

According to a particular embodiment, distances (i.e. $\|x\|$) are calculated using the perceptual loss.

Using the perceptual loss has been observed by the inventors to provide a high quality reconstruction (i.e. the operation of the decoder neural network). By high-quality, what is meant is that the images obtained from the decoder neural network are not blurry, which may happen when using other distances (for example the L1 or the L2 norm).

According to a particular embodiment, the neural network, and/or the encoder neural network, and/or the decoder neural network are convolutional neural networks.

The invention also provides a neural network trained by the method as defined above.

This neural network may be stored on a recording medium.

The invention also provides a system for training a neural network to deliver the viewpoint of a given object visible on an image when this image is inputted to this neural network, the system comprising:

an encoder neural network configured to receive an image as input and to deliver an encoded image,
a decoder neural network configured to receive an encoded image having the same dimensions as an encoded image delivered by the encoder neural network, and configured to output a decoded image,
a first set of training images with, for each image, the viewpoint of an object belonging to a given category which is visible on the image,
a second set of training image pairs, wherein each pair of the second set of training image pairs comprises:

- a first image on which an object belonging to the given category is visible;
- a second image on which the object of the first image is visible with a viewpoint which differs from the viewpoint in the first image,

and a training module configured to adapt the parameters of the neural network, the parameters of the encoder neural network, and the parameters of the decoder neural network by minimizing the distances between:

- for each training image of the first set of training images, the output of the neural network when the training image is inputted to the neural network, with the viewpoint of this training image,
- for each pair of the second set of training image pairs, the second image of each pair of the second set of training image pairs with the output of the decoder neural network when:

  ◦ the first image of this pair is inputted to the encoder neural network to obtain an encoded image,
  ◦ the second image of this pair is inputted to the neural network to obtain a viewpoint,
  ◦ the encoded image is rotated by a rotation corresponding to this viewpoint to obtain a rotated encoded image,
  ◦ the rotated encoded image is inputted into the decoder neural network to obtain the output of the decoder neural network.

This system may be configured to perform any one of the embodiments of the above defined method.

The invention also provides a system including the neural network.

The invention also provides a vehicle comprising the system as defined above.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Brief description of the drawings

How the present disclosure may be put into effect will now be described by way of example with reference to the appended drawings, in which:

- figure 1 is a schematic representation of the viewpoint of an object observed by a camera,
- figure 2 is a schematic representation of the structure of the neural networks used during the training,
- figure 3 is a schematic representation of a system according to an example, and
- figure 4 is a vehicle according to an example.

Description of the embodiments

An exemplary method for training a neural network to deliver the viewpoint of a given object visible on an image will now be described.

The viewpoint of an object is defined as the combination of the azimuth angle of the object with respect to a camera, the elevation of the object, and the in-plane rotation of the object.

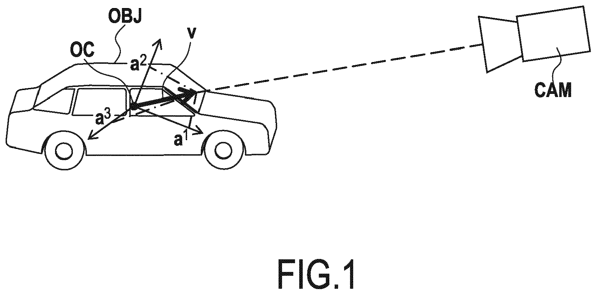

On figure 1, an object OBJ (here a car) has been represented in a scene which is observed by camera CAM (i.e. the object will be visible in images acquired by the camera CAM). The viewpoint of an object seen by a camera can be expressed in different manners, for example using the axis-angle representation, a unit quaternion, or a rotation matrix. In the present description, the viewpoint (azimuth, the elevation, and the in-plane rotation) is expressed using a vector v of three values, which are the coordinates of this vector which starts at the origin of a referential placed with respect to the object OBJ and which is oriented towards the camera CAM. On the figure, this referential is placed at the center OC of the object, and the three coordinates are $a^1$, $a^2$, and $a^3$.

Preferably, the vector v has a norm of 1 (the three coordinates define a point on a sphere of radius 1, as this facilitates expressing a rotation, as will be described hereinafter.

Also, the referential is associated with a given orientation of the object, for all the objects having the same category (for example car).

The methods of the invention relate to training a neural network so that it can output the three values $a^1$, $a^2$, and $a^3$.

As can be conceived by the person skilled in the art, this training will be directed to categories of objects. For example, the neural network will be trained to deliver the viewpoint of a car when a car is visible on the image. The invention is however not limited to the detection of the viewpoint of a car but can also concern other objects, preferably objects which can be observed on a road.

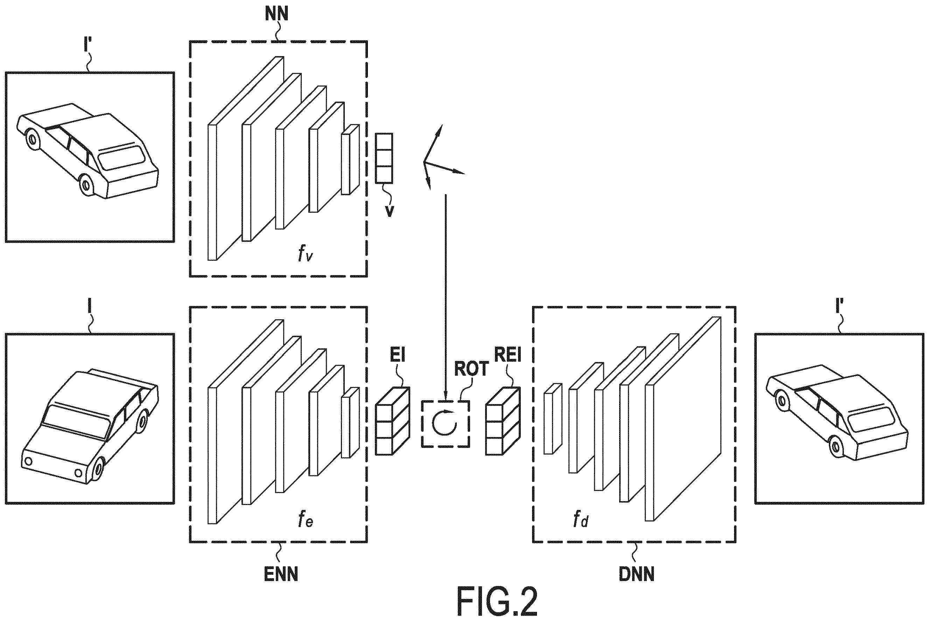

Figure 2 is a schematic representation of the structure of the neural networks used during the training, and of the neural network which will be trained.

On the figure, reference NN designates the neural network to be trained (also called "the neural network" in the present description for the sake of simplicity). The neural network NN is, in the illustrated example, a convolutional neural network having multiple layers, which can use 3x3 convolutions. By way of example, batch normalization layers and activation functions may also be used according to standard practices in the art. In fact, the person skilled in the art will know how to design a neural network suitable for the task of delivering viewpoints (a vector of three values) when an image is inputted to this neural network (a matrix of vectors having a depth equal to 3 (RGB)).

On the figure, the inputted image is designated as *I'* for reasons which will become clearer hereinafter. The viewpoint is designated as *v*.

For a given set of *m* labelled images with their ground-truth viewpoints with respect to a camera defined as

$T = \{(I_i, v_i)\}_{i=1}^m$ . where $I_i$ is an RGB image which belongs to I and $v_i = (a^1, a^2, a^3) \in V$ is the three dimensional vector of the ground-truth viewpoint of objects visible on each image. The neural network NN performs the function $f_v : I \rightarrow V$ such that $f_v(I; \theta_v) = v$ where $\theta_v$ are the parameters of $f_v$. In a manner which is known in the art, it is possible to train this neural network by minimizing the following sum:

$$\sum_{(I,v) \in T} \| f_v(I; \theta_v) - v \|^2$$

This training will include adapting $\theta_v$, for example by performing a stochastic gradient descent.

It should be noted that this training is often designated as supervised training.

In the present method, additional images are used to train the neural network. *T* is a first set of training images, and a second set of training images *U* is also provided. The images of the second set can be unlabeled, which means that there is no a priori knowledge of the viewpoint of the objects visible on the images of this set.

The second set contains training image pairs, with each pair containing:

- a first image on which an object belonging to the given category is visible; and
- a second image on which the object of the first image is visible with a viewpoint which differs from the viewpoint in the first image.

Thus, the second set *U* is designated as $U = \{(I_i; I_i')\}$ and each pair contains images of a same object, for example a same car or plane, captured at different viewpoints.

In order to use the second set *U* to train the neural network NN, an encoder neural network ENN is provided. This encoder neural network is configured to receive an image (*I* on the figure) as input, and to deliver an encoded image as output (EI on the figure).

For example, the encoder neural network is a convolutional neural network including five blocks, with each block comprising two convolutional layers with the second convolutional layer using stride in order to reduce spatial dimensions. The convolutions are 3x3 convolutions with a channel depth which starts at 32 and which doubles every block. These five blocks of the encoder neural network are further connected to a fully connected layer.

Because a fully connected layer is used, the output of the encoder neural network is a vector. Preferably, the depth of this vector is lower than the resolution image *I* (image height times image width times 3 for RGB). Also, the resolution of this vector is preferably a multiple of three so as to facilitate a subsequent rotation.

On the figure, the encoder neural network ENN receives an image *I* from a pair of images and outputs the encoded image EI. The operation of the encoder neural network ENN is written as $fe(I; \theta_e)$, with $\theta_e$ being the parameters of the encoder neural network ENN which will be adapted during training.

Also, there is provided a decoder neural network DNN configured to receive an encoded image as input having the same dimensions as the encoded images outputted by the encoder neural network ENN, and configured to output images which have the same dimensions as the images inputted to the encoder neural network ENN.

On the figure, the decoder neural network DNN receives a rotated encoded image REI, this rotation will be described hereinafter, and outputs an image which is designated as *I'*.

The structure of the decoder neural network is a mirrored version of the structure of the decoder neural network.

It appears that the encoder neural network and the decoder neural network form an auto-encoder.

The operation of the decoder neural network, for example when used in an auto-encoder operation, can be written as $f_d(fe(I; \theta_e); \theta_d)$, with $\theta_d$ being the parameters of the decoder neural network ENN which will be adapted during training.

While it is possible to obtain decoded images from encoded images which correspond to the original image, information regarding the viewpoint may not be clearly usable in the encoded image. Instead, the present method involves a conditional image generation technique.

In the present method, for a given pair of images $(I_i; I_i')$ that show a same object under different viewpoints, the viewpoint of the object visible on a second image *I'* of a pair will be used to deduce a rotation ROT to be applied to an encoded image obtained from the first image *I* of this pair, before inputting the rotated image to the decoder neural network. Consequently, the image delivered by the decoder neural network should correspond to the second image *I'*, or, at least, minimizing the distance between *I'* and the output of the decoder neural network is the goal of the training. Thus, on the figure, the reference *I'* is also used to designate the output of the decoder neural network.

If the viewpoint of image *I'* is unknown (i.e. *I'* is an unlabeled image), determining this viewpoint may be done using the neural network NN. The neural network outputs a viewpoint *v* from which a rotation matrix can be deduced to perform a rotation operation ROT which will rotate the encoded image EI into a rotated encoded image REI. A multiplication between the rotation matrix and the vector/encoded image EI which has a resolution which is a multiple of three.

By way of example, deducing this rotation matrix from the viewpoint of v can be performed using the "look at" transformation which is well known to the person skilled in the art. For example, this transformation is used in the library OpenGL in its version 2.1. An explanation of the operation of this transformation is present in August 2020 at URL: https://www.khronos.org/registry/OpenGL-Refpages/gl2.1/xhtml/gluLookAt.xml. In the example described at this URL, "eye" is equivalent to the viewpoint, "center" is set at (0,0,0) and "up" at (0,0,1).

This feature addresses the lack of ground-truth for *I'*, and extends the learning of the encoder/decoder neural network to unlabeled images by allowing gradients originating from the decoder to be back-propagated to the neural network NN.(*I*. On the figure, *I'* is therefore used to designate both the input of the neural network NN, and the output of the decoder neural network DNN.

The above use of the neural network NN leads to a training which can be designated as unsupervised training.

It can be conceived that using the neural network NN to obtain the viewpoint is only relevant if the neural network NN is trained and accurate. In order to synergistically use the labeled images and the unlabeled images during the training so as to better train the neural network NN, the invention combines in a single loss function a loss associated with the unlabeled images $U$ and a loss associated with the labeled images $T$. Thus, the present method combines a supervised training and an unsupervised training.

In the present method, training the neural network NN comprises adapting the parameters of the neural network, the parameters of the encoder neural network, and the parameters of the decoder neural network (respectively $\theta_v$, $\theta_e$, $\theta_d$) by minimizing the distances between:

- for each training image of the first set $T$ of training images, the output of the neural network when the training image is inputted to the neural network, with the viewpoint of this training image,
- for each pair of the second set $u$ of training image pairs, the second image of each pair of the second set of training image pairs with the output of the decoder neural network when:

  ○ the first image $I$ of this pair is inputted to the encoder neural network ENN to obtain an encoded image EI,
  ○ the second image $I'$ of this pair is inputted to the neural network NN to obtain a viewpoint $v$,
  ○ the encoded image EII is rotated by a rotation ROT corresponding to this viewpoint to obtain a rotated encoded image REI,
  ○ the rotated encoded image REI is inputted into the decoder neural network to obtain the output of the decoder neural network.

In other words, the following loss function $L$ is used:

$$
L = \min_{\theta_v, \theta_e, \theta_d} \begin{array}{c} \sum_{(I,v)\in T} \|f_v(I; \theta_v) - v\|^2 \\ +\lambda \sum_{(I,I')\in T} \left\|f_d\big(R(f_v(I'; \theta_v)) \times f_{e(I;\theta_e)}\big); \theta_d\big) - I'\right\|^2 \end{array}
$$

In the above equation, $\lambda$ is a hyperparameter having a value which will be set during a calibration step. This hyperparameter indicates a tradeoff between the unsupervised and supervised training.

While the above formula is directed to using the entirety of $T$ and $U$, training may be performed iteratively, with each iteration comprising selecting a given number of individual images (for example 64) from $T$ and $U$ so as to use them in the above two sums for calculating a loss to be used in the back-propagation (for example using the stochastic gradient method or another method).

Thus, a batch-training is performed.

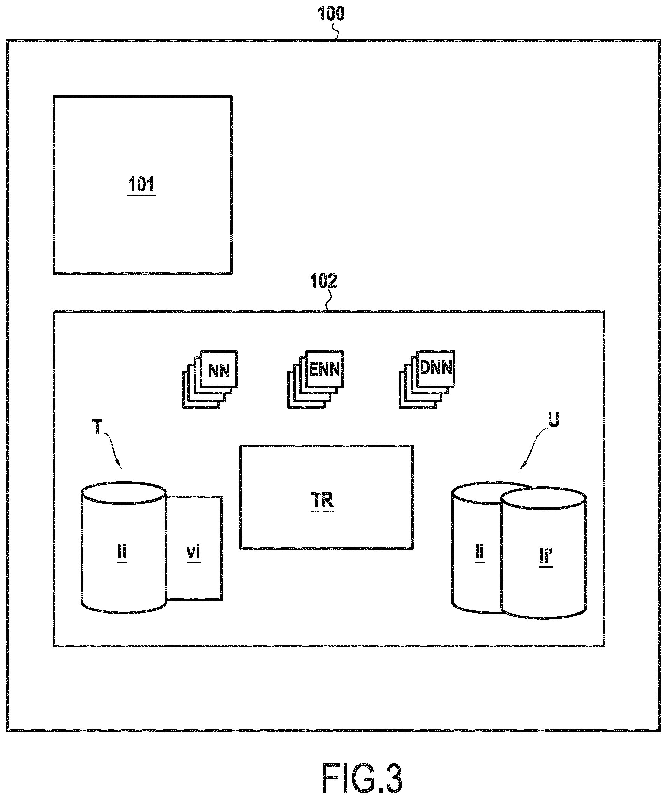

Figure 3 is a schematic representation of a system 100 configured to perform the method described in relation to figure 2.

This system comprises a processor 101 and a non-volatile memory 102. The system 100 therefore has a computer system structure.

In the non-volatile memory 102, the neural network NN, the encoder neural network ENN, and the decoder neural network DNN are stored.

Additionally, the first set $T$ and the second set $U$ are stored in the non-volatile memory 102.

A training module TR is also stored in the non-volatile memory 102 and this module can consist in computer program instructions which, when executed by the processor 101, will perform the training and adapt the weights $\theta_v$, $\theta_e$, and $\theta_d$.

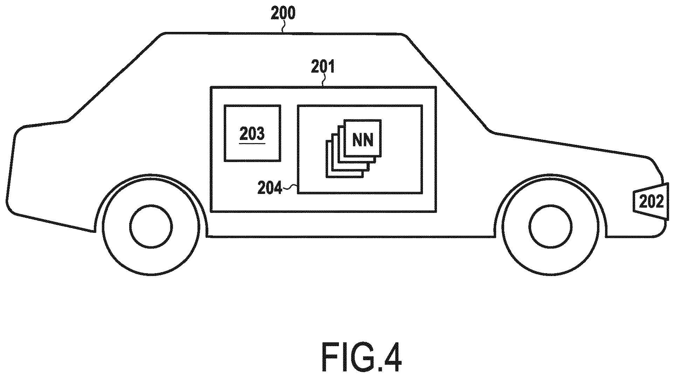

Figure 4 is a schematic representation of a vehicle 200, here a car, equipped with a system 201 for determining the viewpoints of objects visible on images acquired by a camera 202 of the vehicle.

The system 201 comprises a processor 203 and a non-volatile memory 204 in which the neural network NN is stored after the training described in reference to figure 2 has been performed.

The above-described training allows obtaining neural networks which have been observed to perform better at detecting viewpoints than neural networks simply trained using a labelled set of training images (supervised training). Notably, it has been observed that various increases of accuracy can be obtained using a portion of the labelled dataset using for training.

**Claims**

1. A method for training a neural network (NN) to deliver the viewpoint (*v*) of a given object visible on an image when this image is inputted to this neural network, the method comprising:

   providing an encoder neural network (ENN) configured to receive an image as input and to deliver an encoded image,
   providing a decoder neural network (DNN) configured to receive an encoded image having the same dimensions as an encoded image delivered by the encoder neural network, and configured to output a decoded image,
   providing a first set (*T*) of training images with, for each image ($I_i$), the viewpoint ($v_i$) of an object belonging to a given category which is visible on the image,
   providing a second set (*U*) of training image pairs, wherein each pair of the second set of training image pairs comprises:

   - a first image (*I*) on which an object belonging to the given category is visible;
   - a second image (*I'*) on which the object of the first image is visible with a viewpoint which differs from the viewpoint in the first image, ,

   and wherein training the neural network comprises adapting the parameters of the neural network ($\theta_v$), the parameters of the encoder neural network ($\theta_e$), and the parameters of the decoder neural network ($\theta_d$) by minimizing the distances between:

   - for each training image of the first set of training images, the output of the neural network when the training image is inputted to the neural network, with the viewpoint of this training image,
   - for each pair of the second set of training image pairs, the second image of each pair of the second set of training image pairs with the output of the decoder neural network when:

     o the first image of this pair is inputted to the encoder neural network to obtain an encoded image,
     o the second image of this pair is inputted to the neural network to obtain a viewpoint,
     o the encoded image is rotated by a rotation corresponding to this viewpoint to obtain a rotated encoded image,
     o the rotated encoded image is inputted into the decoder neural network to obtain the output of the decoder neural network,

   and wherein training the neural network is performed by combining in a single loss function a loss associated with the second set (*U*) of training image pairs and a loss associated with the first set (*T*) of training images.

2. The method of claim 1, wherein the viewpoint of an object visible on an image comprises 3 values defining a vector expressed in a referential centered with respect to the object and oriented towards the image acquisition apparatus used to acquire the image.

3. The method of claim 1 or 2, wherein the encoded image is a vector having a resolution which is lower than the resolution of the image.

4. The method of any one of claims 1 to 3, wherein the dimension of the encoded image is a multiple of three.

5. The method of any one of claims 1 to 4, wherein training the neural network is performed using the following loss function:

$$L = \min_{\theta_v, \theta_e, \theta_d} \sum_{(I,v) \in T} \|f_v(I; \theta_v) - v\|^2 + \lambda \sum_{(I,I') \in T} \left\| f_d\big(R\big(f_v(I'; \theta_v)\big) \times f_{e(I;\theta_e)}\big); \theta_d\big) - I'\right\|^2$$

wherein:

$L$ is the loss,
$T$ is the first set of training images,
$U$ is the second set of pairs of training images,
$I$ is a first image of a pair of training images of the second set of training images or an image of the first training set,
$I'$ is a second image of a pair of training images,
$f_v$, $f_e$, and $f_d$ are respectively the neural network, the encoder neural network, and the decoder neural network,
$\theta_v$, $\theta_e$, and $\theta_d$ are respectively the parameters of $f_v$, $f_e$, and $f_d$,
$v$ is the viewpoint of image $I$,
$R(x)$ is a function which determines a rotation associated with viewpoint $x$, and
$\lambda$ is a hyperparameter of the training.

6. The method of claim 5, wherein distances are calculated using the perceptual loss.

7. The method of any one of claims 1 to 6, wherein the neural network, and/or the encoder neural network, and/or the decoder neural network are convolutional neural networks.

8. A neural network trained by the method according to any one of claims 1 to 7.

9. A system for training a neural network to deliver the viewpoint ($v$) of a given object visible on an image when this image is inputted to this neural network, the system comprising:

an encoder neural network (EN) configured to receive an image as input and to deliver an encoded image,
a decoder neural network (DNN) configured to receive an encoded image having the same dimensions as an encoded image delivered by the encoder neural network, and configured to output a decoded image,
a first set ($T$) of training images with, for each image ($I_i$), the viewpoint ($v_i$) of an object belonging to a given category which is visible on the image,
a second set ($U$) of training image pairs, wherein each pair of the second set of training image pairs comprises:

- a first image ($I$) on which an object belonging to the given category is visible;
- a second image ($I'$) on which the object of the first image is visible with a viewpoint which differs from the viewpoint in the first image,

and a training module (TR) configured to adapt the parameters of the neural network ($\theta_v$), the parameters of the encoder neural network ($\theta_e$), and the parameters of the decoder neural network ($\theta_d$) by minimizing the distances between:

- for each training image of the first set of training images, the output of the neural network when the training image is inputted to the neural network, with the viewpoint of this training image,
- for each pair of the second set of training image pairs, the second image of each pair of the second set of training image pairs with the output of the decoder neural network when:

o the first image of this pair is inputted to the encoder neural network to obtain an encoded image,
o the second image of this pair is inputted to the neural network to obtain a viewpoint,
o the encoded image is rotated by a rotation corresponding to this viewpoint to obtain a rotated encoded image,
o the rotated encoded image is inputted into the decoder neural network to obtain the output of the decoder neural network,

and wherein training the neural network is performed by combining in a single loss function a loss associated with the second set (U) of training image pairs and a loss associated with the first set (T) of training images.

10. A system including the neural network according to claim 8.

11. A vehicle comprising the system according to claim 10.

12. A computer program including instructions for executing the steps of a method according to any one of claims 1 to 7 when said program is executed by a computer.

**13.** A recording medium readable by a computer and having recorded thereon a computer program including instructions for executing the steps of a method according to any one of claims 1 to 7 when said instructions are executed by a computer.

**Patentansprüche**

**1.** Verfahren zum Trainieren eines neuronalen Netzwerks (NN), um den Blickwinkel (*v*) eines bestimmten Objekts zu liefern, das auf einem Bild sichtbar ist, wenn dieses Bild in dieses neuronale Netzwerk eingegeben wird, wobei das Verfahren umfasst:

Bereitstellen eines codierenden neuronalen Netzwerks (ENN), das dazu ausgestaltet ist, ein Bild als Eingabe zu empfangen und ein codiertes Bild zu liefern,
Bereitstellen eines decodierenden neuronalen Netzwerks (DNN), das dazu ausgestaltet ist, ein codiertes Bild zu empfangen, das die gleichen Dimensionen wie ein codiertes Bild aufweist, das von dem codierenden neuronalen Netzwerk geliefert wird, und das dazu ausgestaltet ist, ein decodiertes Bild auszugeben,
Bereitstellen eines ersten Satzes (*T*) von Trainingsbildern mit dem Blickwinkel (*v_i*) eines Objekts, das zu einer bestimmten Kategorie gehört und auf dem Bild sichtbar ist, für jedes Bild (*I_i*),
Bereitstellen eines zweiten Satzes (*U*) von Trainingsbildpaaren, wobei jedes Paar des zweiten Satzes von Trainingsbildpaaren umfasst:

- ein erstes Bild (*I*), auf dem ein Objekt, das zu der bestimmten Kategorie gehört, sichtbar ist,
- ein zweites Bild (*I'*), auf dem das Objekt des ersten Bildes aus einem anderen Blickwinkel als dem Blickwinkel in dem ersten Bild sichtbar ist,

und wobei das Trainieren des neuronalen Netzwerks das Anpassen der Parameter des neuronalen Netzwerks (*θ_v*), der Parameter des codierenden neuronalen Netzwerks (*θ_e*) und der Parameter des decodierenden neuronalen Netzwerks (*θ_d*) durch Minimieren der Entfernungen zwischen Folgendem umfasst:

- für jedes Trainingsbild des ersten Satzes von Trainingsbildern, der Ausgabe des neuronalen Netzwerks, wenn das Trainingsbild in das neuronale Netzwerk eingegeben wird, und dem Blickwinkel dieses Trainingsbilds,
- für jedes Paar des zweiten Satzes von Trainingsbildpaaren, dem zweiten Bild jedes Paares des zweiten Satzes von Trainingsbildpaaren und der Ausgabe des decodierenden neuronalen Netzwerks, wenn:

∘ das erste Bild dieses Paares in das codierende neuronale Netzwerk eingegeben wird, um ein codiertes Bild zu erhalten,
∘ das zweite Bild dieses Paares in das neuronale Netzwerk eingegeben wird, um einen Blickwinkel zu erhalten.
∘ das codierte Bild um eine diesem Blickwinkel entsprechende Drehung gedreht wird, um ein gedrehtes, codiertes Bild zu erhalten,
∘ das gedrehte, codierte Bild in das decodierende neuronale Netzwerk eingegeben wird, um die Ausgabe des decodierenden neuronalen Netzwerks zu erhalten,

und wobei das Trainieren des neuronalen Netzwerks durch Kombinieren eines dem zweiten Satz (*U*) von Trainingsbildpaaren zugeordneten Verlusts und eines dem ersten Satz (*T*) von Trainingsbildern zugeordneten Verlusts zu einer einzigen Verlustfunktion durchgeführt wird.

**2.** Verfahren nach Anspruch 1, wobei der Blickwinkel eines Objekts, das auf einem Bild sichtbar ist, drei Werte umfasst, die einen Vektor definieren, der mit einer Referenz ausgedrückt wird, die in Bezug auf das Objekt zentriert und auf das Bilderfassungsgerät ausgerichtet ist, das zum Erfassen des Bilds verwendet wurde.

**3.** Verfahren nach Anspruch 1 oder 2, wobei das codierte Bild ein Vektor ist, der eine Auflösung aufweist, die niedriger als die Auflösung des Bildes ist.

**4.** Verfahren nach einem der Ansprüche 1 bis 3, wobei die Dimension des codierten Bildes ein Vielfaches von drei ist.

**5.** Verfahren nach einem der Ansprüche 1 bis 4, wobei das Trainieren des neuronalen Netzwerks unter Verwendung der folgenden Verlustfunktion durchgeführt wird:

$$L = \min_{\theta_v,\theta_e,\theta_d} \begin{array}{l} \sum_{(I,v)\in T} \|f_v(I;\theta_v) - v\|^2 \\ +\lambda \sum_{(I,I')\in T} \left\|f_d\big(R\big(f_v(I';\theta_v)\big) \times f_{e(I;\theta_e)}\big);\theta_d\big) - I'\right\|^2 \end{array}$$

wobei:

$L$ der Verlust ist,
$T$ der erste Satz von Trainingsbildern ist,
$U$ der zweite Satz von Paaren von Trainingsbildern ist,
$I$ ein erstes Bild eines Paares von Trainingsbildern des zweiten Satzes von Trainingsbildern oder ein Bild des ersten Trainingssatzes ist,
$I'$ ein zweites Bild eines Paares von Trainingsbildern ist,
$f_v$, $f_e$ und $f_d$ jeweils das neuronale Netzwerk, das codierende neuronale Netzwerk bzw. das decodierende neuronale Netzwerk sind,
$\theta_v$, $\theta_e$ und $\theta_d$ jeweils die Parameter von $f_v$, $f_e$ und $f_d$ sind,
$v$ ist der Blickwinkel des Bildes $I$ ist,
$R(x)$ eine Funktion ist, die eine Drehung bestimmt, die dem Blickwinkel $x$ zugeordnet ist, und
$\lambda$ ein Hyperparameter des Trainings ist.

6. Verfahren nach Anspruch 5, wobei Entfernungen unter Verwendung des wahrgenommenen Verlusts berechnet werden.

7. Verfahren nach einem der Ansprüche 1 bis 6, wobei das neuronale Netzwerk und/oder das codierende neuronale Netzwerk und/oder das decodierende neuronale Netzwerk faltende neuronale Netzwerke sind.

8. Neuronales Netzwerk, trainiert mit dem Verfahren nach einem der Ansprüche 1 bis 7.

9. System zum Trainieren eines neuronalen Netzwerks, um den Blickwinkel ($v$) eines bestimmten Objekts zu liefern, das auf einem Bild sichtbar ist, wenn dieses Bild in dieses neuronale Netzwerk eingegeben wird, wobei das System umfasst:

ein codierendes neuronales Netzwerk (ENN), das dazu ausgestaltet ist, ein Bild als Eingabe zu empfangen und ein codiertes Bild zu liefern,
ein decodierendes neuronales Netzwerk (DNN), das dazu ausgestaltet ist, ein codiertes Bild zu empfangen, das die gleichen Dimensionen wie ein codiertes Bild aufweist, das von dem codierenden neuronalen Netzwerk geliefert wird, und das dazu ausgestaltet ist, ein decodiertes Bild auszugeben,
einen ersten Satz ($T$) von Trainingsbildern mit dem Blickwinkel ($v_i$) eines Objekts, das zu einer bestimmten Kategorie gehört und auf dem Bild sichtbar ist, für jedes Bild ($I_i$),
einen zweiten Satz ($U$) von Trainingsbildpaaren, wobei jedes Paar des zweiten Satzes von Trainingsbildpaaren umfasst:

- ein erstes Bild ($I$), auf dem ein Objekt, das zu der bestimmten Kategorie gehört, sichtbar ist,
- ein zweites Bild ($I'$), auf dem das Objekt des ersten Bildes aus einem anderen Blickwinkel als dem Blickwinkel in dem ersten Bild sichtbar ist,

und ein Trainingsmodul (TR), das dazu ausgestaltet ist, die Parameter des neuronalen Netzwerks ($\theta_v$), die Parameter des codierenden neuronalen Netzwerks ($\theta_e$) und die Parameter des decodierenden neuronalen Netzwerks ($\theta_d$) durch Minimieren der Entfernungen zwischen Folgendem anzupassen:

- für jedes Trainingsbild des ersten Satzes von Trainingsbildern, der Ausgabe des neuronalen Netzwerks, wenn das Trainingsbild in das neuronale Netzwerk eingegeben wird, und dem Blickwinkel dieses Trainingsbilds,
- für jedes Paar des zweiten Satzes von Trainingsbildpaaren, dem zweiten Bild jedes Paares des zweiten Satzes von Trainingsbildpaaren und der Ausgabe des decodierenden neuronalen Netzwerks, wenn:

◦ das erste Bild dieses Paares in das codierende neuronale Netzwerk eingegeben wird, um ein codiertes Bild zu erhalten,
◦ das zweite Bild dieses Paares in das neuronale Netzwerk eingegeben wird, um einen Blickwinkel zu erhalten.
◦ das codierte Bild um eine diesem Blickwinkel entsprechende Drehung gedreht wird, um ein gedrehtes, codiertes Bild zu erhalten,
◦ das gedrehte, codierte Bild in das decodierende neuronale Netzwerk eingegeben wird, um die Ausgabe des decodierenden neuronalen Netzwerks zu erhalten,

und wobei das Trainieren des neuronalen Netzwerks durch Kombinieren eines dem zweiten Satz (*U*) von Trainingsbildpaaren zugeordneten Verlusts und eines dem ersten Satz (*T*) von Trainingsbildern zugeordneten Verlusts zu einer einzigen Verlustfunktion durchgeführt wird.

**10.** System, welches das neuronale Netzwerk nach Anspruch 8 beinhaltet.

**11.** Fahrzeug, umfassend das System nach Anspruch 10.

**12.** Computerprogramm, das Anweisungen zum Ausführen der Schritte eines Verfahrens nach einem der Ansprüche 1 bis 7 beinhaltet, wenn das Programm von einem Computer ausgeführt wird.

**13.** Von einem Computer lesbares Aufzeichnungsmedium, auf dem ein Computerprogramm aufgezeichnet ist, das Anweisungen zum Ausführen der Schritte eines Verfahrens nach einem der Ansprüche 1 bis 7 beinhaltet, wenn die Anweisungen von einem Computer ausgeführt werden.

**Revendications**

**1.** Procédé d'entraînement d'un réseau neuronal (NN) pour délivrer le point de vue (v) d'un objet donné visible dans une image quand cette image est fournie en entrée de ce réseau neuronal, le procédé comprenant le fait de :

fournir un réseau neuronal encodeur (ENN) configuré pour recevoir une image comme entrée et pour délivrer une image encodée,
fournir un réseau neuronal décodeur (DNN) configuré pour recevoir une image codée ayant les mêmes dimensions qu'une image codée délivrée par le réseau neuronal encodeur, et configuré pour fournir une image décodée,
fournir un premier ensemble (*T*) d'images d'entraînement avec, pour chaque image ($I_i$), le point de vue ($v_i$) d'un objet appartenant à une catégorie donnée qui est visible sur l'image,
fournir un deuxième ensemble (*U*) de paires d'images d'entraînement, chaque paire du deuxième ensemble de paires d'images d'entraînement comprenant :

- une première image (*I*) dans laquelle un objet appartenant à la catégorie donnée est visible ;
- une deuxième image (*I'*) dans laquelle l'objet de la première image est visible avec un point de vue qui diffère du point de vue dans la première image,

et l'entraînement du réseau neuronal comprenant l'adaptation des paramètres du réseau neuronal ($\theta_v$), les paramètres du réseau neuronal encodeur ($\theta_e$), et les paramètres du réseau neuronal décodeur ($\theta_d$) en minimisant les distances entre :

- pour chaque image d'entraînement du premier ensemble d'images d'entraînement, la sortie du réseau neuronal quand l'image d'entraînement est fournie en entrée du réseau neuronal, avec le point de vue de cette image d'entraînement,
- pour chaque paire du deuxième ensemble de paires d'images d'entraînement, la deuxième image de chaque paire du deuxième ensemble de paires d'images d'entraînement avec la sortie du réseau neuronal décodeur quand :

○ la première image de cette paire est fournie en entrée dans le réseau neuronal encodeur pour obtenir une image codée,
○ la deuxième image de cette paire est fournie en entrée dans le réseau neuronal pour obtenir un point de vue,
○ l'image codée est tournée d'une rotation correspondant à ce point de vue pour obtenir une image codée tournée,
○ l'image codée tournée est fournie en entrée du réseau neuronal décodeur pour obtenir la sortie du réseau neuronal décodeur,

et l'entraînement du réseau neuronal étant réalisé en combinant dans une fonction de perte unique une perte associée au deuxième ensemble (*U*) de paires d'images d'entraînement et une perte associée au premier ensemble (*T*) d'images d'entraînement.

2. Procédé selon la revendication 1, selon lequel le point de vue d'un objet visible dans une image comprend 3 valeurs définissant un vecteur exprimé dans un référentiel centré par rapport à l'objet et orienté vers l'appareil d'acquisition d'image utilisé pour acquérir l'image.

3. Procédé selon la revendication 1 ou 2, selon lequel l'image codée est un vecteur ayant une résolution qui est inférieure à la résolution de l'image.

4. Procédé selon l'une quelconque des revendications 1 à 3, selon lequel la dimension de l'image codée est un multiple de trois.

5. Procédé selon l'une quelconque des revendications 1 à 4, selon lequel l'entraînement du réseau neuronal est réalisé en utilisant la fonction de perte suivante :

$$L = \min_{\theta_v, \theta_e, \theta_d} \sum_{(I,v) \in T} \|f_v(I; \theta_v) - v\|^2 + \lambda \sum_{(I,I') \in T} \left\| f_d\big(R\big(f_v(I'; \theta_v)\big) \times f_{e(I; \theta_e)}\big); \theta_d\big) - I' \right\|^2$$

où :

*L* est la perte,
*T* est le premier ensemble d'images d'entraînement,
*U* est le deuxième ensemble de paires d'images d'entraînement,
*I* est une première image d'une paire d'images d'entraînement du deuxième ensemble d'images d'entraînement ou une image du premier ensemble d'entraînement,
*I'* est une deuxième image d'une paire d'images d'entraînement,
$f_v$, $f_e$, et $f_d$ sont respectivement le réseau neuronal, le réseau neuronal encodeur, et le réseau neuronal décodeur,
$\theta_v$, $\theta_e$ et $\theta_d$ sont respectivement les paramètres de $f_v$, $f_e$, et $f_d$,
*v* est le point de vue de l'image *I*,
*R(x)* est une fonction qui détermine une rotation associée au point de vue *x,* et
$\lambda$ est un hyperparamètre de l'entraînement.

6. Procédé selon la revendication 5, selon lequel des distances sont calculées en utilisant la perte de perception.

7. Procédé selon l'une quelconque des revendications 1 6, selon lequel le réseau neuronal, et/ou le réseau neuronal encodeur, et/ou le réseau neuronal décodeur sont des réseaux neuronaux convolutifs.

8. Réseau neuronal entraîné par le procédé selon l'une quelconque des revendications 1 à 7.

9. Système d'entraînement d'un réseau neuronal pour délivrer le point de vue (*v*) d'un objet donné visible dans une image quand cette image est fournie en entrée dans ce réseau neuronal, le système comprenant :

un réseau neuronal encodeur (EN) configuré pour recevoir une image comme entrée et pour délivrer une image codée,

un réseau neuronal décodeur (DNN) configuré pour recevoir une image codée ayant les mêmes dimensions qu'une image codée délivrée par le réseau neuronal encodeur, et configuré pour fournir une image décodée,

un premier ensemble ($T$) d'images d'entraînement avec, pour chaque image ($I_i$), le point de vue ($v_i$) d'un objet appartenant à une catégorie donnée qui est visible dans l'image,

un deuxième ensemble ($U$) de paires d'images d'entraînement, chaque paire du deuxième ensemble de paires d'images d'entraînement comprenant :

- une première image ($I$) sur laquelle un objet appartenant à la catégorie donnée est visible ;

une deuxième image ($I'$) sur laquelle l'objet de la première image est visible avec un point de vue qui diffère du point de vue dans la première image,

et un module d'entraînement (TR) configuré pour adapter les paramètres du réseau neuronal ($\theta_v$), les paramètres du réseau neuronal encodeur ($\theta_e$), et les paramètres du réseau neuronal décodeur ($\theta_d$) en minimisant les distances entre :

- pour chaque image d'entraînement du premier ensemble d'images d'entraînement, la sortie du réseau neuronal quand l'image d'entraînement est fournie en entrée du réseau neuronal, avec le point de vue de cette image d'entraînement,

- pour chaque paire du deuxième ensemble de paires d'images d'entraînement, la deuxième image de chaque paire du deuxième ensemble de paires d'images d'entraînement avec la sortie du réseau neuronal décodeur quand :

○ la première image de cette paire est fournie en entrée dans le réseau neuronal encodeur pour obtenir une image codée,

○ la deuxième image de cette paire est fournie en entrée dans le réseau neuronal pour obtenir un point de vue,

○ l'image codée est tournée par une rotation correspondant à ce point de vue pour obtenir une image codée tournée,

○ l'image codée tournée est fournie en entrée dans le réseau neuronal décodeur pour obtenir la sortie du réseau neuronal décodeur,

et l'entraînement du réseau neuronal étant réalisé en combinant dans une fonction de perte unique une perte associée au deuxième ensemble ($U$) de paires d'images d'entraînement et une perte associée au premier ensemble ($T$) d'images d'entraînement.

10. Système comprenant le réseau neuronal selon la revendication 8.

11. Véhicule comprenant le système selon la revendication 10.

12. Programme informatique comprenant des instructions pour exécuter les étapes d'un procédé selon l'une quelconque des revendications 1 à 7 quand ledit programme est exécuté par un ordinateur.

13. Support d'enregistrement lisible par un ordinateur et ayant enregistré dessus un programme informatique comprenant des instructions pour exécuter les étapes d'un procédé selon l'une quelconque des revendications 1 à 7 quand lesdites instructions sont exécutées par un ordinateur.

FIG.1

FIG.2

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multi-view object class detection with a 3d geometric model. **LIEBELT, J. ; SCHMID, C.** IEEE Computer Society Conference on Computer Vision and Pattern-Recognition. IEEE, 2010, 1688-1695
- **SU, H ; QI, C.R. ; LI, Y. ; GUIBAS, L.J.** Render for cnn: Viewpoint estimation in images using cnns trained with rendered 3d model views. *Proceedings of the IEEE International Conference on Computer Vision.,* 2015, 2686-2694

- **RHODIN, H. ; SALZMANN, M ; FUA, P.** Unsupervised geometry-aware representation for 3d human pose estimation. *Proceedings of the European Conference on Computer Vision (ECCV).,* 2018, 750-767
- **L. PEREZ REY ; JARNIKOV; D ; HOLENDERSKI.** Semi-supervised pose estimation with geometric latent representations. *M, submitted to the ICLR 2019 conference*